# EUROPÄISCHE PATENTANMELDUNG

(11) **EP 1 859 901 A1**
(43) Veröffentlichungstag der Anmeldung: **28.11.2007**
(21) Anmeldenummer: 06010571.5
(22) Anmeldetag: 23.05.2006
(51) Int. Cl.: B24C 7/00, F16K 27/06, F16K 11/087, F16K 5/06, F16K 5/20

(54) **Vorrichtung zum Flüssigkeitsabrasivsuspensionsstrahlen**

(71) Anmelder: ANT Applied New Technologies AG, 23560 Lübeck (DE)
(72) Erfinder: Poort, Hans- Ulrich, 27419 Sittensen (DE); Linde, Marco, 13619 Rehhorst (DE)
(74) Vertreter: Vollmann, Heiko

(57) **Zusammenfassung**

Die Vorrichtung ist zum Flüssigkeitsabrasivsuspensionsstrahlen und insbesondere zum Wasserabrasivsuspensionsstrahlen vorgesehen. Sie weist eine Hochdruckpumpe auf, welche eine Flüssigkeit in eine Hauptleitung (2) und parallel in eine mit einem Absperrventil (12) verschließbare Nebenleitung (4) fördert, Dabei führt die Nebenleitung (4) ausgangsseitig des Absperrventils (12) durch einen Druckbehälter (6) zur Aufnahme einer Suspension aus einer Flüssigkeit und einem Abrasivmittel wieder zur Hauptleitung (2), an deren Ende eine Austragsdüse vorgesehen ist. In der Nebenleitung (12) ist ausgangsseitig des Druckbehälters (6) ein Ventil (8) zur Steuerung der Suspensionszufuhr in die Hauptleitung (2) vorgesehen. Auch die Hauptleitung (2) ist durch das Ventil (8) zur Steuerung der Suspensionszufuhr in die Hauptleitung (2) geführt, derart, dass ein Ventilkörper (20) des Ventils (8) von der in der Hauptleitung (2) geführten Flüssigkeit um- und/oder durchspült ist.

## Beschreibung

Die Erfindung betrifft eine Vorrichtung zum Flüssigkeitsabrasivsuspensionsstrahlen mit den im Oberbegriff des Anspruchs 1 angegebenen Merkmalen sowie ein Ventil für eine solche Vorrichtung.

Zum Flüssigkeitsabrasivsuspensionsstrahlen sind Vorrichtungen bekannt, bei denen eine Hochdruckpumpe eine Trägerflüssigkeit, typischerweise Wasser, in einer Hauptleitung und in einer Nebenleitung (Bypass) fördert. Die Nebenleitung mündet in einem Druckbehälter, in dem das Abrasivmittel befindlich ist, wobei der in der Nebenleitung geführte Flüssigkeitsstrom durch den Druckbehälter gelangt, dort Abrasivmittel mitnimmt und über eine Leitung aus dem Druckbehälter in die Hauptleitung führt. Am Ende der Hauptleitung wird die aus der Trägerflüssigkeit und dem Abrasivmittel bestehende Suspension über eine Austragsdüse ausgetragen.

Bei diesen Vorrichtungen ist es üblich, in der Nebenleitung ausgangsseitig des Druckbehälters vor der Zusammenführung von Neben- und Hauptleitung ein steuerbares Ventil anzuordnen, mit dem der Zustrom des Abrasivmittels gesteuert bzw. unterbunden werden kann. Dabei hat es sich als nachteilig erwiesen, dass sich das Abrasivmittel innerhalb des Ventils zwischen bewegten Ventilteilen festsetzen kann, was zu einem Verschleiß des Ventils und ungünstigstenfalls zu dessen Zerstörung führen kann. Hierdurch ist die Funktionsfähigkeit der gesamten Vorrichtung gefährdet.

Vor diesem Hintergrund liegt der vorliegenden Erfindung die Aufgabe zugrunde, eine Vorrichtung zum Flüssigkeitsabrasivsuspensionsstrahlen dahingehend zu verbessern, dass eine hohe Lebensdauer und eine hohe Funktionssicherheit auch hinsichtlich dieser Schaltfunktion erreicht wird.

Diese Aufgabe wird mit einer Vorrichtung mit den in Anspruch 1 angegebenen Merkmalen gelöst, insbesondere durch Einsatz eines Ventils mit den im Anspruch 2 angegebenen Merkmalen. Vorteilhafte Ausgestaltungen der Erfindung sind in den Unteransprüchen, in der nachfolgenden Beschreibung sowie der Zeichnung angegeben.

Die erfindungsgemäße Vorrichtung ist zum Flüssigkeitsabrasivsuspensionsstrahlen und insbesondere zum Wasserabrasivsuspensionsstrahlen vorgesehen. Sie weist eine Hochdruckpumpe auf, welche eine Flüssigkeit in eine Hauptleitung und parallel in eine mit einem Absperrventil verschließbare Nebenleitung fördert. Die Nebenleitung führt ausgangsseitig des Absperrventils durch einen Druckbehälter zur Aufnahme einer Suspension aus einer Flüssigkeit und einem Abrasivmittel wieder zu der Hauptleitung. An dem Ende der Hauptleitung ist eine Austragsdüse angeordnet. In der Nebenleitung ist ausgangsseitig des Druckbehälters ein Ventil zur Steuerung der Suspensionszufuhr in die Hauptleitung vorgesehen. Erfindungsgemäß ist auch die Hauptleitung durch dieses Ventil zur Steuerung der Suspensionszufuhr in die Hauptleitung geführt, derart, dass ein Ventilkörper des Ventils von der in der Hauptleitung geführten Flüssigkeit um- und/oder durchspült ist.

Gemäß der Erfindung wird der Ventilkörper des Ventils zur Steuerung der Suspensionszufuhr von dem durch die Hauptleitung geführten Hochdruckflüssigkeitsstrom, bei dem es sich bevorzugt um einen Hochdruckwasserstrom handelt, um- und bei entsprechender Ventilausgestaltung und -stellung auch durchströmt. Derart ausgebildet nutzt die erfindungsgemäße Vorrichtung den von der Hochdruckpumpe erzeugten Hochdruckflüssigkeitsstrom, um die bei der Durchleitung der Suspension im Bereich zwischen Ventilkörper und Ventilgehäuse gelangte Abrasivmittelteilchen aus dem Ventil herauszubefördern, welche sich sonst in und an dem Ventilkörper festsetzen könnten und in dem Ventil durch die Stellbewegung des Ventilkörpers einen abrasiven Verschleiß verursachen könnten. Auf diese Weise wird vorteilhaft die Zuverlässigkeit und Lebensdauer des Ventils erhöht, was sich somit auch positiv auf die Lebensdauer und Zuverlässigkeit der gesamten Vorrichtung auswirkt.

Hierzu ist gemäß der Erfindung ein Ventil zur Steuerung der Suspensionszufuhr vorgesehen, das ein Ventilgehäuse aufweist, in welchem ein erster mit einem Ventilkörper verschließbarer Strömungspfad für eine Suspension aus einer Flüssigkeit und einem Abrasivmittel und ein zweiter Strömungspfad für eine Flüssigkeit ausgebildet sind. Dabei ist vorgesehen, dass der Ventilkörper über einen kanalbildenden Spalt von dem Ventilgehäuse beabstandet ist, wobei der Spalt je nach Schaltstellung ein Teil des zweiten Strömungspfades oder der zweite Strömungspfad ist.

Zum Anschluss an die Nebenleitung der erfindungsgemäßen Vorrichtung weist das erfindungsgemäße Ventil einen Suspensionseinlass und einen Suspensionsauslass auf. Innerhalb des Ventils sind der Suspensionseinlass und der Suspensionsauslass über den in dem Ventilgehäuse ausgebildeten ersten Strömungspfad miteinander strömungsverbunden. Dieser erste Strömungspfad kann von dem Ventilkörper wahlweise verschlossen oder freigegeben werden, wodurch die Suspensionszufuhr durch die Nebenleitung in dem Ventil unterbrochen oder geöffnet wird.

Daneben weist das Ventil einen Flüssigkeitseinlass und einen Flüssigkeitsauslass auf, die miteinander über den in dem Ventilgehäuse ausgebildeten zweiten Strömungspfad strömungsverbunden sind. Der Flüssigkeitseinlass und der Flüssigkeitsauslass dienen zum Anschluss des Ventils an die Hauptleitung der erfindungsgemäßen Vorrichtung. In dem zweiten Strömungspfad ist der Ventilkörper zum Verschließen des ersten Strömungspfades angeordnet. Dieser Ventilkörper ist derart ausgebildet und dimensioniert, dass er unabhängig davon, ob er den ersten Strömungspfad verschließend oder freigebend stellt, zusammen mit dem Ventilgehäuse einen kanalbildenden Spalt bildet. Dieser Spalt schafft für den an dem Flüssigkeitseinlass eintretenden Hochdruckflüssigkeitsstrom eine Strömungsverbindung zu dem Flüssigkeitsauslass, wobei dieser Hochdruckflüssigkeitsstrom direkt um den Ventilkörper geführt ist und den Ventilkörper so beim Durchfluss durch den kanalbildenden Spalt in großen Bereichen umspült und etwaige dort befindliche Abrasivmittelteilchen aus dem Ventil heraus befördert. Dabei ist der Ventilkörper ungeachtet der Schaltstellung stets vom Hochdruckflüssigkeitsstrom umspült. Bei abgesperrter Suspensionszufuhr zusätzlich auch durchspült.

Der erste und der zweite Strömungspfad sind in dem Ventilgehäuse vorteilhafterweise normal zueinander ausgerichtet. Dementsprechend wird das Ventil in einer ersten Richtung von der Suspension und in einer zu der ersten Richtung senkrechten zweiten Richtung von dem Hochdruckflüssigkeitsstrom durchströmt. Bevorzugt ist dabei der erste Strömungspfad durch den zweiten Strömungspfad hindurch geführt, ohne eine Strömungsverbindung von erstem und zweitem Strömungspfad zu schaffen. Vorteilhaft wird der Abschnitt des ersten Strömungspfades, welcher den zweiten Strömungspfad quasi kreuzt, von dem Ventilkörper des erfindungsgemäßen Ventils gebildet. Dies ermöglicht eine besonders kompakte Ventilausbildung. Gegebenenfalls ist bei dieser Ausgestaltung auch eine Veränderung der Strömungsquerschnitte beider Strömungspfade mit nur einem Ventilkörper möglich.

In einer bevorzugten Ausgestaltung weist der Ventilkörper einen Strömungskanal auf und ist derart bewegbar, dass der Strömungskanal in einer ersten Stellung einen Abschnitt des ersten Strömungspfades bildet und in einer zweiten Stellung einen Abschnitt eines Teils des zweiten Strömungspfades bildet.

So bildet der Strömungskanal in der ersten Stellung des Ventilkörpers den Abschnitt des ersten Strömungspfades, der eine Strömungsverbindung von dem Suspensionseinlass zu dem Suspensionsauslass herstellt, so dass die Suspension aus Flüssigkeit und Abrasivmittel durch das Ventil strömen kann. In der zweiten Stellung des Ventilkörpers, in welcher der Ventilkörper den ersten Strömungspfad verschließt, schafft der Strömungskanal in dem zweiten Strömungspfad neben der von dem kanalbildenden Spalt zwischen Ventilkörper und Ventilgehäuse gebildeten Strömungsverbindung eine weitere Strömungsverbindung von Flüssigkeitseinlass und Flüssigkeitsauslass, wodurch auch dieser Bereich von Abrasivmittel gereinigt werden kann.

Demgemäß wird der Strömungskanal in dem Ventilkörper in der ersten Stellung von der Suspension und in der zweiten Stellung von der Flüssigkeit durchströmt. Dies verhindert vorteilhaft eine Verstopfung des Strömungskanals durch dort festgesetzte Abrasivmittelteilchen, da diese dann, wenn sich der Ventilkörper in seiner zweiten Stellung befindet, von der Flüssigkeit aus dem Strömungskanal und aus dem Ventil herausgespült werden können.

Zweckmäßigerweise ist der Ventilkörper mit einer Schaltwelle bewegungsgekoppelt und um die Drehachse der Schaltwelle drehbar. Bevorzugt greift bei dieser Ausgestaltung ein Ende der Schaltwelle formschlüssig in den in dem Ventilgehäuse drehbar gelagerten Ventilkörper ein. Daneben greift in Verlängerung der Drehachse der Schaltwelle ein Zentrierstift in den Ventilkörper eingreift.

Dementsprechend ist das erfindungsgemäße Ventil bevorzugt quasi als Drehschieberventil ausgebildet, wobei die Schaltwelle dazu dient, den Ventilkörper bzw. den Drehschieber zumindest in eine den ersten Strömungspfad verschließende Stellung und eine den ersten Strömungspfad freigebende Stellung zu drehen. Die Bewegungskopplung von Schaltwelle und Ventilkörper erfolgt bei dieser Ausbildung über einen Formschluss dieser beiden Bauteile, der eine drehfeste Verbindung von Schaltwelle und Ventilkörper schafft, um ein an der Schaltwelle ausgeübtes Drehmoment auf den Ventilkörper übertragen zu können.

Der Ventilkörper ist besonders günstig kugelförmig ausgebildet. Dies ermöglicht ein kleines Bauvolumen des Ventils. Besonders vorteilhaft kann mit einem kugelförmig ausgebildeten Ventilkörper, insbesondere bei Anordnung des Ventilkörpers in einem hohlzylindrischen Bereich des Ventilgehäuses, der kanalbildende Spalt zwischen Ventilkörper und Ventilgehäuse verwirklicht werden, da der Abstand des Ventilkörpers über den Kugelumfang von der Innenwandung des Ventilgehäuses variiert, so dass ungeachtet der Kugelstellung stets ein Spalt zwischen Ventilkörper und Ventilgehäuse verbleibt.

Bei einer kugelförmigen Ausbildung des Ventilkörpers ist dieser vorteilhaft zwischen zwei Kugelsitzen in Richtung des ersten Strömungspfades fixiert. Dabei ist der Ventilkörper zwischen den Kugelsitzen drehbeweglich gelagert. Zu diesem Zweck weisen die Kugelsitze vorteilhaft eine kalottenförmige Ausnehmung auf, deren Innendurchmesser mit dem Außendurchmesser des Ventilkörpers korrespondiert. Bevorzugt weisen die Kugelsitze jeweils eine Bohrung auf, die eine Strömungsverbindung von einem durch den Ventilkörper geführten Strömungskanal zu dem Suspensionseinlass bzw. dem Suspensionsauslass bildet.

Eine bevorzugte Ausgestaltung des erfindungsgemäßen Ventils sieht vor, dass das Ventilgehäuse einen hohlzylindrischen Grundkörper aufweist, dessen Stirnseiten jeweils von einem Deckel verschlossen werden. Dabei ist der Grundkörper jeweils mit einem O-Ring gegenüber dem Deckel abgedichtet. Als O-Ring ist hier bevorzugt ein kombinierter O-Stützring vorgesehen, welcher verhindert, dass sich der O-Ring bei dem in dem Ventil herrschenden hohen Druck in dem Ventilgehäuse verschiebt.

Nachfolgend ist die Erfindung anhand eines in der Zeichnung dargestellten Ausführungsbeispiels näher erläutert. Darin zeigt:
- Fig. 1: eine Prinzipskizze einer Vorrichtung zum Flüssigkeitsabrasivsuspensionsstrahlen mit einem Ventil zur Steuerung der Suspensionszufuhr in einer die Suspensionszufuhr verschließenden Stellung,
- Fig. 2: eine Prinzipskizze der Vorrichtung gemäß Fig. 2 mit dem Ventil zur Steuerung der Suspensionszufuhr in einer die Suspensionszufuhr freigebenden Stellung,
- Fig. 3: ein Ventil zur Steuerung der Suspensionszufuhr im Längsschnitt und
- Fig. 4: das Ventil gemäß Fig. 3 in einer Schnittansicht entlang der Schnittlinie IV-IV in Fig. 3.

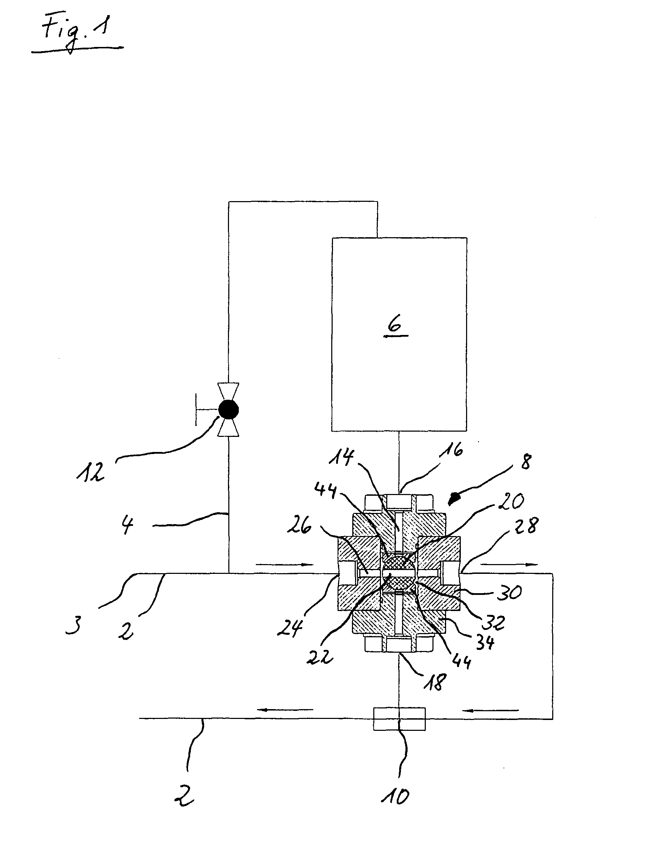

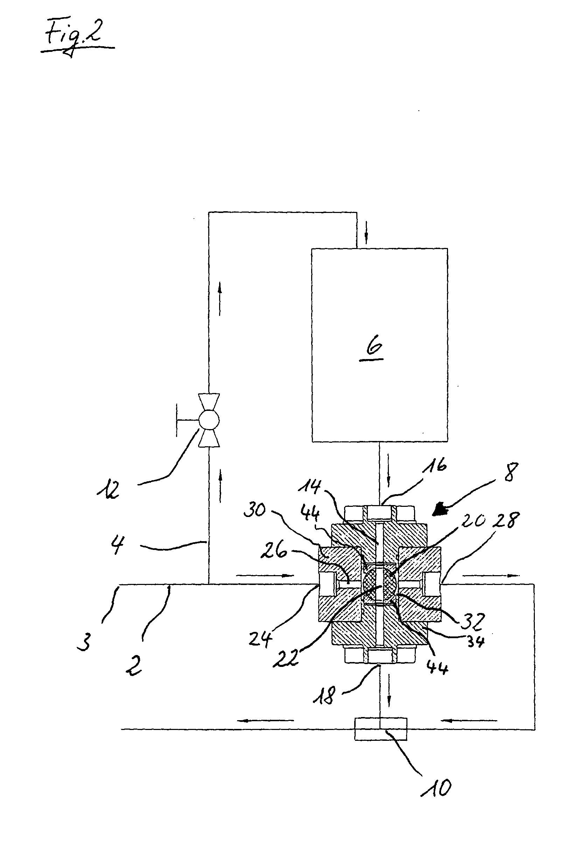

Die in den Figuren 1 und 2 dargestellte Vorrichtung zum Flüssigkeitsabrasivsuspensionsstrahlen weist eine Hauptleitung 2 auf, welche von einer nicht dargestellten Hochdruckpumpe an einem Hochdruckflüssigkeitseingang 3 mit einem Hochdruckflüssigkeitsstrom gespeist wird. Von der Hauptleitung 2 zweigt eine Nebenleitung 4 ab, welche parallel zu der Hauptleitung 2 geführt ist und an einem T-Stück 10 wieder mit der Hauptleitung 2 zusammengeführt wird. Die Nebenleitung 4 ist durch einen Druckbehälter 6 geführt. Der Druckbehälter 6 ist mit einem Abrasivmittel bzw. mit einer Suspension aus Flüssigkeit und Abrasivmittel gefüllt. Dem Druckbehälter 6 ist in der Nebenleitung 4 ein Absperrventil 12 vorgeschaltet, mit welchem die Nebenleitung 4 geöffnet bzw. verschlossen werden kann.

Ausgangsseitig des Druckbehälters 6 ist die Nebenleitung 4 durch ein Ventil 8 zur Steuerung der Suspensionszufuhr geführt. Dabei weist das Ventil 8 einen ersten Strömungspfad von einem Suspensionseinlass 16 zu einem Suspensionsauslass 18 auf. Dieser erste Strömungspfad kann von einem kugelförmigen Ventilkörper 20 verschlossen bzw. freigegeben werden. Hierzu weist der Ventilkörper 20 eine Bohrung 22 auf, welche einen Strömungskanal 22 durch den Ventilkörper 20 bildet. Wie der Fig. 2 zu entnehmen ist, kann der Ventilkörper' 20 derart gestellt werden, dass der Strömungskanal 22 einen Abschnitt des ersten Strömungspfades bildet, so dass das Ventil 8 von einer Suspension aus der Flüssigkeit und dem Abrasivmittel durchflossen werden kann.

Neben der Nebenleitung 4 ist auch die Hauptleitung 2 durch das Ventil 8 geführt. Dabei bildet das Ventil 8 ausgehend von einem Flüssigkeitseinlass 24 einen zweiten Strömungspfad hin zu einem Flüssigkeitsauslass 28. Der zweite Strömungspfad ist in dem Ventil 8 normal bzw. senkrecht zu dem ersten Strömungspfad ausgerichtet.

Der Ventilkörper 20 ist in dem Gehäuse des Ventils 8 derart angeordnet, dass er mit einem hohlzylindrischen Grundkörper 30 des Ventilgehäuses einen Spalt 32 bildet. Dieser Spalt 32 bildet unabhängig von der Stellung des Ventilkörpers 20 stets eine Strömungsverbindung von dem Flüssigkeitseinlass 24 zu dem Flüssigkeitsauslass 28 und damit einen Abschnitt des zweiten Strömungspfads. Wie der Fig. 1 zu entnehmen ist, kann der Ventilkörper 20 derart bewegt werden, dass der durch den Ventilkörper 20 geführte Strömungskanal 22 eine weitere Strömungsverbindung von dem Flüssigkeitseinlass 24 zu dem Flüssigkeitsauslass 28 bildet und demgemäß einen weiteren Teil des zweiten Strömungspfades bildet.

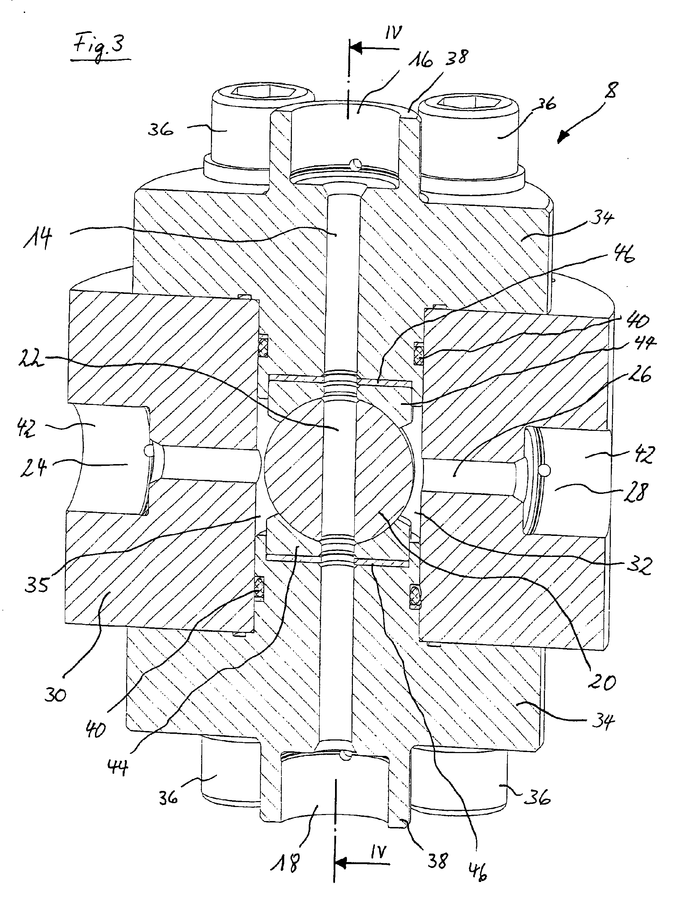

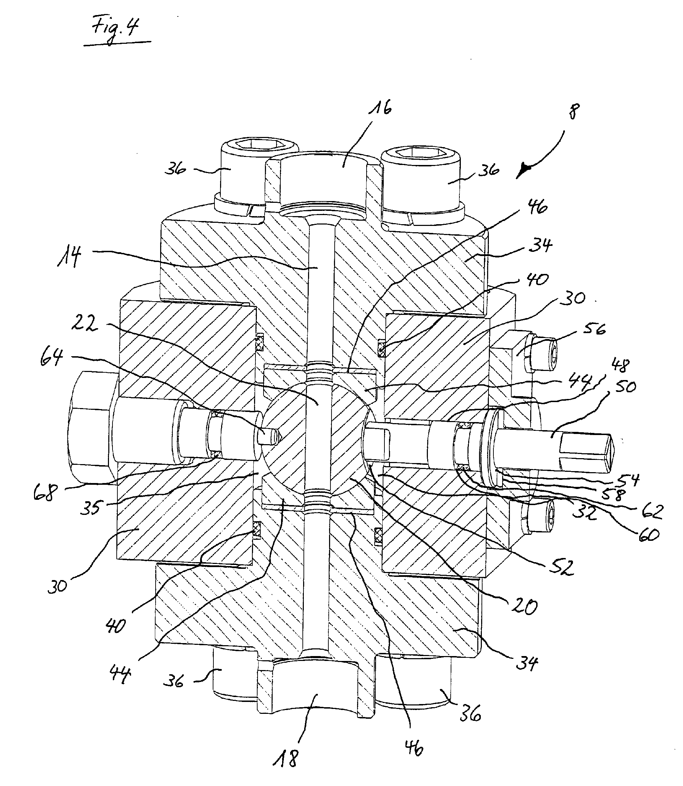

Die Fig. 3 und 4 zeigen ein Ausführungsbeispiel für das erfindungsgemäße Ventil 8 zur Steuerung der Suspensionszufuhr. Das Ventilgehäuse des Ventils 8 besteht aus einem hohlzylindrischen Grundkörper 30, dessen beide Stirnseiten jeweils von einem Ventildeckel 34 verschlossen werden. Die Ventildeckel 34 sind derart ausgebildet, dass sie in das Innere des Grundkörpers 30 eingreifen, wobei der freie Zwischenraum in dem Grundkörper 30 zwischen den Ventildeckeln 34 eine Ventilkammer 35 bildet.

An den Bereichen der Ventildeckel 34, welche in den Grundkörper 30 des Ventils 8 eingreifen, ist umfänglich eine Nut vorgesehen, in welcher jeweils ein O-Stützring 40 angeordnet ist, welcher den Ventildeckel 34 gegenüber den Grundkörper 30 flüssigkeitsdicht abdichtet. Die Ventildeckel 34 sind mit dem Grundkörper 30 mittels Schrauben 36 fest verschraubt.

An ihrer von dem Grundkörper 30 beabstandeten Stirnseite ist an den Ventildeckeln 34 jeweils ein Leitungsanschluss 38 zum Anschluss der Nebenleitung 4 ausgebildet. Dabei bildet der an dem in den Figuren 3 und 4 oben dargestellten Ventildeckel 34 ausgebildete Leitungsanschluss 38 den Suspensionseinlass 16 und der in den Figuren 3 und 4 unten dargestellte Leitungsanschluss 38 den Suspensionsauslass 18, Ausgehend von den Leitungsanschlüssen 38 weisen die Ventildeckel 34 jeweils eine konzentrisch zu ihrer Längsachse angeordnete Bohrung 14 auf, welche im zusammengebauten Zustand des Ventilgehäuses in die Ventilkammer 35 münden. Diese Bohrungen 14 bilden zusammen mit der in dem Ventilkörper 20 ausgebildeten Bohrung 22 den ersten Strömungspfad von dem Suspensionseinlass 16 zu dem Suspensionsauslass 18.

An dem Grundkörper 30 des Ventils 8 sind an der Umfangsfläche einander diametral gegenüberliegend zwei Leitungsanschlüsse 42 ausgebildet, wobei ausgehend von diesen Leitungsanschlüssen 42 jeweils eine hierzu konzentrisch angeordnete Bohrung 26 in der Ventilkammer 35 mündet. Dabei bildet der in den Figuren 3 und 4 links dargestellte Leitungsanschluss den Flüssigkeitseinlass 24 und der in den Figuren 3 und 4 rechts dargestellte Leitungsanschluss 42 den Flüssigkeitsauslass 28 und die hiervon ausgehenden Bohrungen 26 einen Teil des zweiten Strömungspfads von dem Flüssigkeitseinlass 24 zu dem Flüssigkeitsauslass 28.

In der Ventilkammer 35 ist der Ventilkörper 20 des Ventils 8 angeordnet. Der Ventilkörper 20 ist kugelförmig ausgebildet. In Richtung der Längsachse des Ventils 8 bzw. in Richtung des ersten Strömungspfads 14 wird der Ventilkörper 20 in der Ventilkammer 35 von zwei gegenüberliegenden Kugelsitzen 44 abgestützt. Die Kugelsitze 44 weisen jeweils eine kalottenförmige Ausnehmung zur Aufnahme einer Kugelkappe des Ventilköpers 20 auf. Im zusammengebauten Zustand des Ventils 8 sind die Kugelsitze 44 zwischen dem Ventilkörper 20 und den Ventildeckeln 34 festgelegt. Dabei greifen die Kugelsitze 44 jeweils in eine an dem in dem Grundkörper 34 befindlichen Ende der Ventildeckel 34 ausgebildeten Ausnehmung ein, wobei sie jeweils auf einer Distanzscheibe 46 aufliegen. Die Kugelsitze 44 weisen eine Durchbrechung auf, deren Lage und Durchmesser der Bohrung 14 der Ventildeckel 34 entspricht, welche jeweils einen Teil des ersten Strömungspfades bilden. Somit bilden auch die Durchbrechungen an den Kugelsitzen 44 einen Teil des ersten Strömungspfades.

Der Durchmesser des kugelförmigen Ventilkörpers 20 ist kleiner als der Innendurchmesser des Grundkörpers 30. Auf diese Weise ist an den dem Grundkörper 30 zugewandten Seiten des Ventilköpers 20 in der Ventilkammer 35 ein Spalt 32 ausgebildet. Dieser Spalt 32 bildet unabhängig von der Stellung des Ventilkörpers 20 zumindest einen Teil des zweiten Strömungspfads. Eine über den Flüssigkeitseinlass 24 eingeleitete Flüssigkeit wird über die sich daran anschließende Bohrung 26 in die Ventilkammer 35 eingeleitet, wo sie über den Spalt 32 den Ventilkörper 20 umspült und an der gegenüberliegenden Seite an dem Flüssigkeitsauslass 28 ausströmt.

Der Ventilkörper 20 weist eine durch den Kugelmittelpunkt durchgeführte Bohrung auf, welche den Strömungskanal 22 bildet. Der Durchmesser dieses Strömungskanals 22 entspricht den Durchmessern der Ausnehmungen der Kugelsitze 44 sowie der Bohrungen 14 der Ventildeckel 34. Der Ventilkörper 20 kann, wie in den Figuren 3 und 4 dargestellt ist, in eine Stellung bewegt werden, in welcher der Strömungskanal 22 in Zusammenwirken mit den Ausnehmungen an den Kugelsitzen 44 sowie den Bohrungen 14 an den Ventildeckeln 34 den ersten Strömungspfad durch das Ventil 8 bildet, durch den eine Suspension von dem Suspensionseinlass 16 durch das Ventil 8 zu dem Suspensionsauslass 18 strömen kann. Wie der Fig. 1 zu entnehmen ist, kann das Ventil 8 in einer zweiten Stellung so gestellt werden, dass der Strömungskanal 22 einen weiteren Teil des zweiten Strömungspfads bildet. Eine an dem Flüssigkeitseinlass 24 in das Ventil einströmende Flüssigkeit kann dann sowohl über den Spalt 32 als auch über den Strömungskanal 22 zu dem Flüssigkeitsauslass 28 strömen. In dieser Schaltstellung verschließt der Ventilkörper 20 den ersten Strömungspfad 14, so dass das Ventil 8 nicht von der Suspension durchströmt werden kann.

In der Fig. 4 ist die Stellmechanik des Ventilkörpers 20 dargestellt. In einer mit dem zweiten Strömungspfad gemeinsamen Querschnittsebene des Grundkörpers 30 ist in Umfangsrichtung um 90° versetzt eine weitere Bohrung 48 vorgesehen, welche den Grundkörper 30 in radialer Richtung durchbricht. Durch die Bohrung 48 ist eine Schaltwelle 50 geführt, so dass ein Ende der Schaltwelle 50 in die Ventilkammer 35 hineinragt.

Dieses Ende der Schaltwelle 50 ist abgeflacht und greift formschlüssig in eine an dem kugelförmigen Ventilkörper 20 vorgesehene Nut 52. An ihrer Umfangsfläche weist die Schaltwelle 50 eine sich radial nach außen erstreckende kragenförmige Erweiterung 54 auf, welche im montierten Zustand der Schaltwelle 50 an der äußeren Mantelfläche des Grundkörpers 30 des Ventilgehäuses anliegt. Die Schaltwelle 50 ist in axialer Richtung mit einem an der äußeren Mantelfläche des Grundkörpers 30 mittels einer Schraubverbindung befestigten Deckel 56 festgelegt. Dieser Deckel 56 weist eine Durchbrechung zur Führung der Schaltwelle 50 sowie eine Ausnehmung 58 auf, welche die kragenförmige Erweiterung 54 an der Schaltwelle 50 im montierten Zustand aufnimmt. In dem Bereich der Schaltwelle 50, welcher im montierten Zustand der Schaltwelle 50 innerhalb des Grundkörpers 30 liegt; ist an der Schaltwelle 50 über den gesamten Umfang eine Nut 60 vorgesehen, welche zur Aufnahme eines Dichtrings 62 dient, mit dem der Grundkörper 30 gegenüber der Schaltwelle 50 abgedichtet wird.

Der Stelle an dem kugelförmigen Ventilkörper 20, an welcher die Schaltwelle 50 in die Nut 52 des Ventilkörpers 20 eingreift diametral gegenüberliegend und in direkter Verlängerung der Längsachse der Schaltwelle 50, ist an dem Ventilkörper 20 eine Bohrung ausgebildet, in welche ein Zentrierstift 64 eingreift. Der Zentrierstift 64 ist in einer Stellschraube 66 festgelegt, welche durch eine Durchbrechung durch den Grundkörper 30 geführt ist. In einem im montierten Zustand der Stellschraube 66 innerhalb des Grundkörpers 30 liegenden Bereichs ist an der Stellschraube 66 über den gesamten Umfang eine Nut angeordnet, in welcher ein Dichtring 68 angeordnet ist, der die Stellschraube 66 gegenüber dem Grundkörper 30 abdichtet.

Nachfolgend ist die Funktionsweise der erfindungsgemäßen Vorrichtung anhand der Fig. 1 und 2 beschrieben.

Fig. 1 zeigt die Vorrichtung in einem Leerlaufzustand. Der Ventilkörper 20 des Ventils 8 ist so gestellt, dass er die Nebenleitung 4 bzw. den ersten Strömungspfad des Ventils 8 verschließt. Gleichzeitig bildet der Strömungskanal 22 in dieser Stellung des Ventils 8 einen Teil des zweiten Strömungspfads. Der von der Hochdruckpumpe geförderte Hochdruckflüssigkeitsstrom wird mit einem Druck von etwa 450 bis 3000 bar durch die Hauptleitung 4 geleitet, wobei er das Ventil 8 über den Strömungskanal 22 und den Spalt 32 durchströmt. Eventuell in die Ventilkammer 35 eingebrachte Abrasivmittelteilchen und in dem Strömungskanal 22 befindliche Abrasivmittelteilchen werden hierbei von dem Hochdruckflüssigkeitsstrom aus dem Ventil 8 ausgespült.

Da die Kugelsitze 44 gegenüber dem kugelförmigen Ventilkörper 20 nicht völlig flüssigkeitsdicht anliegt, kann ein geringer Volumenstrom Flüssigkeit über den Suspensionseinlass 16 in Richtung des Druckbehälters 6 fließen und dort sowie in der Nebenleitung 4 einen Betriebsdruck aufbauen.

Zum Starten eines Schneidprozesses wird das Ventil 8 so gestellt, dass der Strömungskanal 22 in dem Ventilkörper 20 einen Teil des ersten Strömungspfades von dem Suspensionseinlass 16 zu dem Suspensionsauslass 18 bildet. Eine Suspension kann zu diesem Zeitpunkt von dem Druckbehälter 16 noch nicht zu dem T-Stück 10 ausgetragen werden, da das Absperrventil 12, welches in der Nebenleitung 4 eingangsseitig des Druckbehälters 6 angeordnet ist, noch geschlossen ist. Erst nach dessen Öffnen gelangt ein Teilvolumenstrom des Hochdruckflüssigkeitsstroms in die Nebenleitung 4 und in den Druckbehälter 6. Die dort befindliche Flüssigkeits-Abrasivmittel-Suspension wird in Richtung des Ventils 8 in die Nebenleitung 4 gedrückt, die daraufhin über den Suspensionseinlass 16 in das Ventil 8 eintritt und von dort durch den Strömungspfad zu dem Suspensionsauslass 18 und weiter zu dem T-Stück 10 strömt, wo die Suspension in die Hauptleitung 2 eingeleitet wird. Gleichzeitig fließt der Hochdruckflüssigkeitsstrom 2 über den Flüssigkeitseinlass 14 um den Ventilkörper 20 herum zu dem Flüssigkeitsauslass 28 und vermischt sich an dem T-Stück 10 mit der Suspension.

Zum Abschalten des Zustroms der Suspension wird der Ventilkörper 20 derart gedreht, dass der Strömungskanal 22 eine Verbindung von dem Flüssigkeitseinlass 24 zu dem Flüssigkeitsauslass 28 bildet und der erste Strömungspfad von dem Suspensionseinlass 16 zu dem Suspensionsauslass 18 verschlossen wird, so dass keine Suspension durch den ersten Strömungspfad fließen kann. Der Strömungskanal 22 des Ventilkörpers 20 bildet dann einen weiteren Teil des zweiten Strömungspfades, so dass der Hochdruckflüssigkeitsstrom in der Hauptleitung 2 in der Ventilkammer 35 des Ventils 8 sowohl über den Ringspalt 32 in der Ventilkammer 35 als auch über den Strömungskanal 22 in dem Ventilkörper 20 zu dem Flüssigkeitsauslass 30 fließen kann. Der Hochdruckflüssigkeitsstrom umspült dabei den Ventilkörper 20 und durchströmt den Strömungskanal 22. Auf diese Weise werden eventuell in dem Strömungskanal 22 befindliche Abrasivmittelteilchen und auch Abrasivmittelteilchen, welche sich an der Außenseite des Ventilkörpers 20 festgesetzt haben, von dem Hochdruckflüssigkeitsstrom aus der Ventilkammer 35 und dem Ventil 8 herausgespült. Auf diese Weise wird die Gefahr eines durch Abrasivmittelteilchen hervorgerufenen Ventilverschleißes deutlich verringert und die Zuverlässigkeit der erfindungsgemäßen Vorrichtung deutlich gesteigert.

### Bezugszeichenliste

- 2 -: Hauptleitung
- 3 -: Hochdruckflüssigkeitseingang
- 4 -: Nebenleitung
- 6 -: Druckbehälter
- 8 -: Ventil
- 10 -: T-Stück
- 12 -: Absperrventil
- 14 -: Bohrung
- 16 -: Suspensionseinlass
- 18 -: Suspensionsauslass
- 20 -: Ventilkörper
- 22 -: Strömungskanal, Bohrung in 20
- 24 -: Flüssigkeitseinlass
- 26 -: Bohrung
- 28 -: Flüssigkeitsauslass
- 30 -: Grundkörper
- 32 -: Spalt
- 34 -: Ventildeckel
- 35 -: Ventilkammer
- 36 -: Schraube
- 38 -: Leitungsanschluss
- 40 -: O-Stützring
- 42 -: Leitungsanschluss
- 44 -: Kugelsitz
- 46 -: Distanzscheibe
- 48 -: Bohrung
- 50 -: Schaltwelle
- 52: Nut
- 54: Erweiterung
- 56: Deckel
- 58: Ausnehmung
- 60: Nut
- 62: Dichtring
- 64: Zentrierstift
- 66: Stellschraube
- 68: Dichtring

## Patentansprüche

1. Vorrichtung zum Flüssigkeitsabrasivsuspensionsstrahlen, insbesondere zum Wasserabrasivsuspensionsstrahlen, mit einer Hochdruckpumpe, welche eine Flüssigkeit in eine Hauptleitung (2) und parallel in eine mit einem Absperrventil (12) verschließbare Nebenleitung (4) fördert, wobei die Nebenleitung (4) ausgangsseitig des Absperrventils (12) durch einen Druckbehälter (6) zur Aufnahme einer Suspension aus einer Flüssigkeit und einem Abrasivmittel wieder zur Hauptleitung (2) führt, an deren Ende eine Austragsdüse vorgesehen ist und wobei in der Nebenleitung (4) ausgangsseitig des Druckbehälters (6) ein Ventil (8) zur Steuerung der Suspensionszufuhr in die Hauptleitung (2) vorgesehen ist, **dadurch gekennzeichnet, dass** auch die Hauptleitung durch das Ventil (8) geführt ist, derart, dass ein Ventilkörper (20) des Ventils (8) von der in der Hauptleitung (2) geführten Flüssigkeit um- und/oder durchspült ist.

2. Ventil zur Steuerung der Suspensionszufuhr in einer Vorrichtung zum Flüssigkeitsabrasivsuspensionsstrahlen, **dadurch gekennzeichnet, dass** das Ventil (8) ein Ventilgehäuse (30, 34) aufweist, in welchem ein erster mit einem Ventilkörper (20) verschließbaren Strömungspfad (14, 22) für eine Suspension aus einer Flüssigkeit und einem Abrasivmittel und ein zweiter Strömungspfad (22, 26, 32) für eine Flüssigkeit ausgebildet sind, wobei der Ventilkörper (20) über einen kanalbildenden Spalt (32) von dem Ventilgehäuse (30) beabstandet ist und wobei der Spalt (32) ein Teil des zweiten Strömungspfades (22, 26, 32) oder der zweite Strömungspfad (26, 32) ist.

3. Ventil nach Anspruch 2, **dadurch gekennzeichnet, dass** der erste (14, 22) und der zweite Strömungspfad (14, 22) normal zueinander ausgerichtet sind.

4. Ventil nach Anspruch 2 oder 3, **dadurch gekennzeichnet, dass** der Ventilkörper (20) einen Strömungskanal (22) aufweist und derart bewegbar ist, dass der Strömungskanal (22) in einer ersten Stellung einen Abschnitt des ersten Strömungspfades (14, 22) und in einer zweiten Stellung einen Teil des zweiten Strömungspfades (22, 26, 32) bildet.

5. Ventil nach einem der Ansprüche 2 bis 4, **dadurch gekennzeichnet, dass** der Ventilkörper (20) mit einer Schaltwelle (50) bewegungsgekoppelt ist und um die Drehachse der Schaltwelle (50) drehbar ist.

6. Ventil nach Anspruch 5, **dadurch gekennzeichnet, dass** ein Ende der Schaltwelle (50) formschlüssig in den Ventilkörper (20) eingreift und ein Zentrierstift (64) in Verlängerung der Drehachse der Schaltwelle (50) in den Ventilkörper (20) eingreift.

7. Ventil nach einem der Ansprüche 2 bis 6, **dadurch gekennzeichnet, dass** der Ventilkörper (20) kugelförmig ausgebildet ist.

8. Ventil nach Anspruch 7, **dadurch gekennzeichnet, dass** der Ventilkörper (20) zwischen zwei Kugelsitzen (44) vorzugsweise in Richtung des ersten Strömungspfades (14, 22)fixiert ist.

9. Ventil nach einem der vorangehenden Ansprüche, **dadurch gekennzeichnet, dass** das Ventilgehäuse (30, 34) einen hohlzylindrischen Grundkörper (30) aufweist, dessen Stirnseiten jeweils von einem Deckel (34) verschlossen werden, wobei der Grundkörper (30) jeweils mit einem O-Ring (40) gegenüber dem Deckel (34) abgedichtet ist.
